# EUROPÄISCHE PATENTSCHRIFT

(11) **EP 2 080 684 B1**
(45) Veröffentlichungstag und Bekanntmachung des Hinweises auf die Patenterteilung: **25.09.2013**
(21) Anmeldenummer: 08105762.2
(22) Anmeldetag: 11.11.2008
(51) Int. Cl.: B60W 40/04, G06K 9/00

(54) **Verfahren und Vorrichtung zum Erfassen eines vorbeifahrenden Fahrzeuges bei Dunkelheit**
Method and device for recording a passing vehicle in the dark
Procédé et dispositif destinés à la détection d'un véhicule passant devant dans l'obscurité

(30) Priorität: 21.01.2008 DE 102008005314
(43) Veröffentlichungstag der Anmeldung: 22.07.2009
(73) Patentinhaber: Robert Bosch GmbH, 70442 Stuttgart (DE)
(72) Erfinder: Faber, Petko, 71272 Renningen (DE)

(56) Entgegenhaltungen:
- EP-A- 1 513 103
- EP-A- 1 837 803
- WO-A-2008/096234
- DE-A1-102007 018 599
- DE-A1-102007 048 508
- JP-A- 6 276 524
- US-A1- 2008 062 010

## Beschreibung

### STAND DER TECHNIK

Die vorliegende Erfindung betrifft ein Verfahren zum Erfassen eines vorbeifahrenden Fahrzeuges bei Dunkelheit, insbesondere eines ein Fahrzeug überholendes Fahrzeug. Die Erfindung betrifft ferner eine Vorrichtung zum Durchführen eines Verfahrens zum Erfassen eines vorbeifahrenden Fahrzeuges bei Dunkelheit.

Kraftfahrzeuge werden zunehmend mit Fahrerassistenzsystemen ausgerüstet, die den Fahrer beim Führen eines Kraftfahrzeuges unterstützen. Ein Fahrerassistenzsystem aus der DE 10 2004 013 818 A1 erkennt Ein- und Ausschervorgänge anderer Fahrzeuge, damit das Assistenzsystem frühzeitig reagieren kann. Fahrzeuge auf Nebenspuren werden dabei fortlaufend daraufhin überwacht, ob es in eine Fahrspur des eigenen Fahrzeuges eintritt oder diese verlassen hat. Ein Bildverarbeitungssystem erkennt dazu im Vorfeld des Fahrzeuges vorausfahrende Fahrzeuge.

Das Dokument EP 1513 103 A2 zeigt ein System, welches mittels einer Frontkamera von anderen Autos stammende Lichter erkennt und die Art dieser unterscheidet, z.B. nahe Frontscheinwerfer oder entfernte Rücklichter. Dabei werden Bilder mit unterschiedlichen Belichtungszeiten aufgenommen, um eine Analyse zu ermöglichen. Schlussendlich wird mit dieser Information das Scheinwerfersystem des eigenen Fahrzeugs gesteuert.

### OFFENBARUNG DER ERFINDUNG

Das erfindungsgemäße Verfahren mit den Merkmalen des Anspruchs 1 kann ein an einem Fahrzeug vorbeifahrendes anderes Fahrzeuges, insbesondere ein Fahrzeug überholendes anderes Fahrzeug, bei Dunkelheit mit folgenden Schritten erfassen: Erfassen eines sich zu dem Fahrzeug relativ bewegenden Lichtkegels in einem Seitenbereich des Fahrzeuges und Zuordnen des sich relativ bewegenden Lichtkegels zu dem vorbeifahrenden anderen Fahrzeug.

Das Verfahren umgeht eine Problematik geringen Kontrasts einer Fahrzeugkarosserie zu der Umgebung bei Dunkelheit.

Die Erfindung betrifft ferner eine Vorrichtung zum Erfassen eines an einem Fahrzeug vorbeifahrenden Fahrzeuges bei Dunkelheit, insbesondere eine Vorrichtung zum Erfassen eines ein Fahrzeug überholendes anderes Fahrzeug bei Dunkelheit. Eine Kamera erfasst einen Lichtkegeln, der sich seitlich versetzt, relativ zu dem Fahrzeug bewegt. Eine Auswertungseinrichtung ordnet den sich relativ bewegenden Lichtkegel dem vorbeifahrenden Fahrzeug zu.

Das erfindungsgemäße Verfahren und die Vorrichtung haben den Vorteil, dass überholende Fahrzeuge gerade bei Dunkelheit früh erkannt werden, insbesondere früher als bei Erkennung von Rücklichtern. Dies trägt in vorteilhafter Weise dazu bei, dass kritische Verkehrssituationen frühzeitig erkannt werden.

### KURZE BESCHREIBUNG DER ZEICHNUNGEN

Die vorliegende Erfindung wird nachfolgend anhand bevorzugter Ausführungsformen und beigefügten Figuren erläutert. In den Figuren zeigen:
- Fig. 1: eine Ausführungsform bei einer beispielhaften Verkehrssituation;
- Fig. 2: eine Kameraansicht zur Illustration einer Ausführungsform; und
- Fig. 3 bis 6: Kameraansichten zur Illustration eines Verfahrens zum Erkennen eines überholenden Fahrzeuges.

### AUSFÜHRUNGSFORMEN DER ERFINDUNG

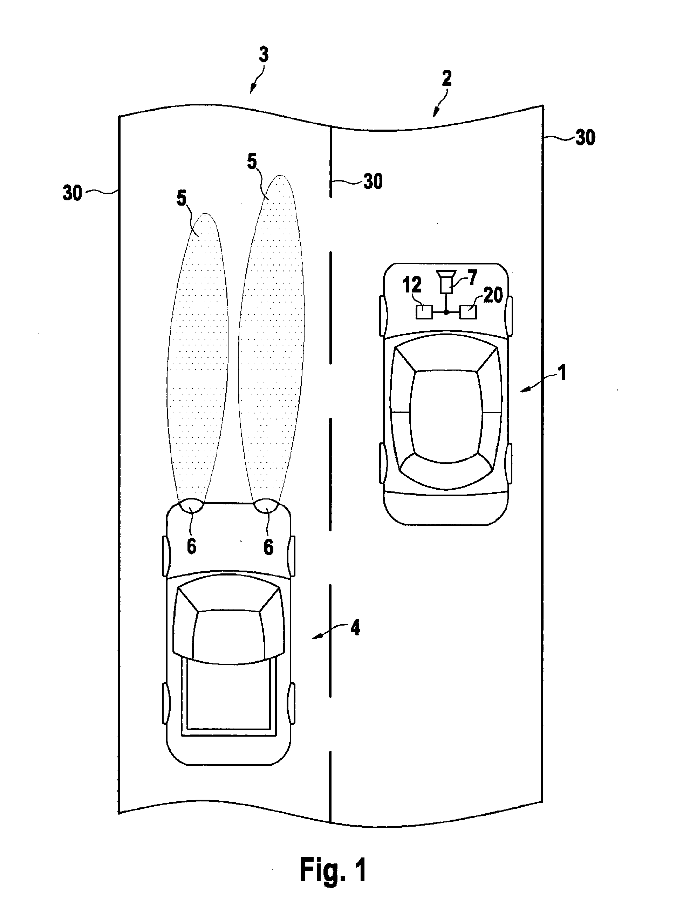

Fig. 1 zeigt ein Fahrzeug 1 auf einer Fahrspur 2. Die Fahrspur 2 ist typischerweise durch eine Fahrbahnmarkierung 30 angezeigt. Die Fahrspur 2 kann im Zusammenhang mit dieser Erfindung auch die Trajektorie des Fahrzeuges 1 bezeichnen.

Neben der Fahrspur 2 des Fahrzeuges 1 ist eine weitere Fahrspur 3 auf der sich ein anderes Fahrzeug 4 bewegen kann. In der in Fig. 1 beispielhaft dargestellten Verkehrssituation überholt das andere Fahrzeug 4 das Fahrzeug 1 auf der linken Seite. Die weitere Fahrspur 3 kann gleich der Fahrspur 2 durch Fahrbahnmarkierungen vorgeben sein. Es besteht jedoch auch die Möglichkeit, dass das andere Fahrzeug zum Überholen die Straße verlässt. Allgemein bezeichnet die weitere Fahrspur 3 die Trajektorie des anderen Fahrzeugs 4.

Bei Dunkelheit sind Frontscheinwerfer 6 des anderen Fahrzeuges 4 eingeschaltet. Lichtkegel 5 der Frontscheinwerfer 6 leuchten die andere Fahrspur 3 bis zu einer vorgegebenen Entfernung aus. Die vorgegebenen Entfernung ist durch die Bauweise der Frontscheinwerfer 6 bedingt und typischerweise durch Verkehrsordnungen und Gesetze festgelegt und daher bekannt.

Das Fahrzeug 1 weist eine Kamera 7 auf. Die Kamera 7 ist eingerichtet eine Verkehrssituation im Vorfeld des Fahrzeuges 1 zu erfassen. Die Kamera 7 erfasst sowohl die Fahrbahn 2, auf der das Fahrzeug 1 fährt, als auch zumindest die unmittelbar links angrenzenden Fahrbahn 3. In einer Ausgestaltung erfasst die Kamera 7 auch die rechts angrenzende Fahrbahn.

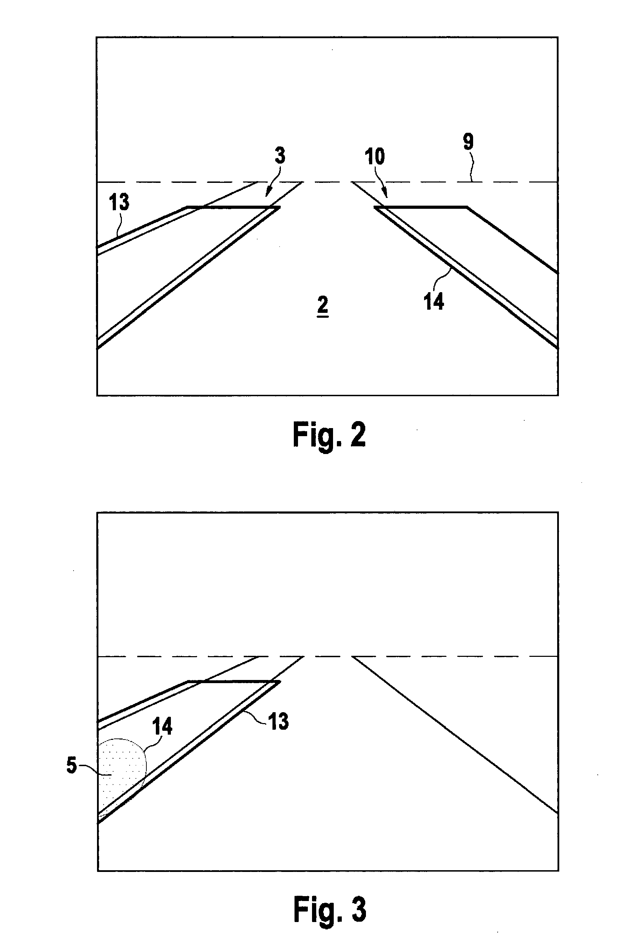

Fig. 2 zeigt ein beispielhaftes Bild, das von der Kamera 7 aufgenommen wird. Bis zu einem Horizont 9 wird die Fahrbahn 2, die links angrenzende weitere Fahrbahn 3 und hier beispielhaft noch die rechts angrenzende Fahrbahn 10 erfasst.

Eine Auswertungseinrichtung 12 erfasst Änderungen in einem Seitenbereich 13.

Der Seitenbereich 13 kann die Fahrspur 3 links neben der Fahrspur 2 des Fahrzeuges 1 abdecken. In einer Ausgestaltung ist der Seitenbereich 13 auf das vor dem Fahrzeug 1 befindliche Vorfeld beschränkt. Ferner kann der Seitenbereich 13 bis auf eine vorgegebene Entfernung beschränkt werden. Die vorgegebene Entfernung kann der Reichweite von Lichtkegeln 6 typisch zu erwartender anderer Fahrzeuge 4 entsprechen. Die Reichweite der Lichtkegel 6 kann für ein Abblendlicht oder ein Fernlicht angenommen werden.

Die Auswertungseinrichtung 12 kann zusätzlich zu dem linken Seitenbereich 13 auch Änderungen in einem rechten Seitenbereich 14 erfassen. Die Anordnung des rechten Seitenbereichs 14 kann spiegelsymmetrisch zu dem linken Seitenbereich 13 sein.

Die Seitenbereiche 13, 14 können durch Maskierungen der anderen Bildelemente realisiert werden. Ferner besteht die Möglichkeit, die Kamera 7 physisch entsprechend dem gewünschten Seitenbereich 13 einzurichten, so dass nur dieser aufgenommen wird.

Im nachfolgenden wird ein Verfahren zum Erfassen eines überholenden anderen Fahrzeuges 4 beschrieben. Das Verfahren kann auch auf ein entgegenkommendes Fahrzeug 4 abgeändert werden.

Die Kamera 7 erfasst ortsaufgelöst das Vorfeld des Fahrzeuges 1. Das gerasterte Bild mit Lichtstärkewerten wird der Auswertungseinrichtung 12 zugeführt.

Ein Dunkelabgleich kann für das gerasterte Bild durchgeführt werden. Der Abgleich kann durch Subtraktion eines gespeicherten Dunkelbildes erfolgen. Das Dunkelbild kann eine standardisierte Fahrbahn zeigen, die von den Scheinwerfen des Fahrzeuges ausgeleuchtet sind. Andere Fahrzeuge, insbesondere auf den linken und rechten Fahrspuren sind in dem Dunkelbild nicht aufgenommen. Das Dunkelbild kann einmal, z.B. ab Werk, oder bei jedem Fahrt, oder in regelmäßigen Intervallen bei Dunkelheit aufgenommen werden.

Fig. 3 zeigt einen im linken Seitenbereich 12 erscheinenden Lichtkegel 5 eines Scheinwerfers 6.

Die Auswertungseinrichtung 12 erfasst einen Anstieg der Lichtstärke (Helligkeit) in dem Seitenbereich 13 des gerasterten Bildes. Eine Schwellwerteinrichtung 20 kann hierfür vorgesehen sein, die auf ein Überschreiten eines Schwellwertes durch einen Lichtstärkewert anspricht. Das gerasterte Bild kann mittels der Schwellwerteinrichtung 20 auf binäre Werte quantisiert werden. Ein Grenzbereich 14 des Übergangs von hell nach dunkel kann durch Differenzieren des quantisierten Bildes ermittelt werden.

Die Auswertungseinrichtung 12 ermittelt, ob der Anstieg innerhalb eines Fahrzeug-nahen Bereichs 14 des Seitenbereichs 12 auftritt oder gleichbedeutend ob der Grenzbereich 14 im Fahrzeug-nahen Bereich 14 liegt.

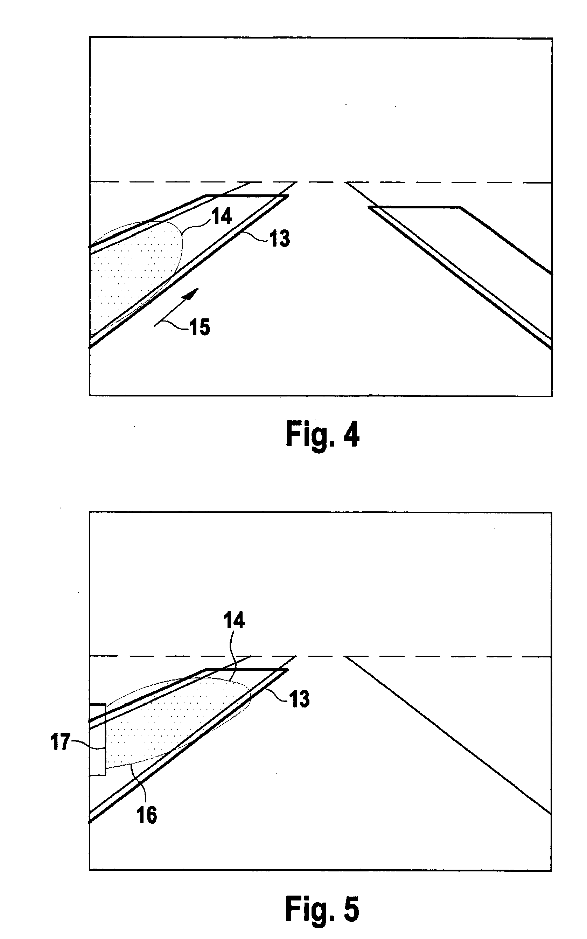

Ist dem der Fall, verfolgt die Auswertungseinrichtung 12 die Bewegungsrichtung des Grenzbereichs 14 in dem Seitenbereich 12. Bei der in Fig. 4 dargestellten Situation wird erfasst, dass sich der Grenzbereich 14 parallel zu Fahrtrichtung 15 bewegt. Die Auswertungseinrichtung 12 ordnet den Grenzbereich 14 basierend auf der Bewegungsrichtung einem Lichtkegel 5 eines überholenden Fahrzeuges 4 zu.

Die Auswertungseinrichtung 12 kann anhand der Bewegung des Grenzbereichs 14 in dem gerasterten Bild auch die relative Geschwindigkeit des überholenden Fahrzeuges bestimmen. Basierend auf einer bekannten Reichweite von Lichtkegeln 5 von Scheinwerfern 6 kann die Auswertungseinrichtung 14 auch den Zeitpunkt schätzen, an dem der Überholvorgang abgeschlossen sein wird.

Fig. 5 zeigt eine Verkehrsituation, wenn das überholende Fahrzeug 4 neben dem Fahrzeug 1 fährt oder teilweise an dem Fahrzeug 1 vorbei gefahren ist.

Die Auswertungseinrichtung 12 erfasst einen Abfall der Lichtstärke unter einen Schwellwert in einem Fahrzeug-nahen Bereich des Seitenbereichs 13. Der Grenzbereich 16 abfallender Intensität wird einem Anfang des Lichtkegels 5 zugeordnet, der nicht auf die Fahrbahn auftrifft. Die Scheinwerfer des überholenden Fahrzeuges sind nun nicht weit von der Frontpartie des überholten Fahrzeuges 1 entfernt. Die Auswertungseinrichtung 12 kann, wenn sie eine abfallende Intensität erfasst, ein Signal ausgeben, welches anzeigt, dass sich das überholende Fahrzeug zumindest teilweise neben dem überholten Fahrzeug 1 befindet.

Die Auswertungseinrichtung 12 ermittelt das Auftreten eines kontrastreichen Übergangs von Hell nach Dunkel im Fahrzeug-nahen Randbereich 13. Das Auftreten des kontrastreichen Übergangs ordnet die Auswertungseinrichtung 12 der Frontpartie 17 des überholenden Fahrzeuges 4 zu.

Verschiebt sich der kontrastreiche Übergang, d.h. die abgebildete Frontpartie 17, über eine Schwelle 19 in dem Bild hinweg, kann die Auswertungseinrichtung 12 ein Signal ausgeben, welches anzeigt, dass das überholende Fahrzeug 4 das überholte Fahrzeug 1 passiert hat.

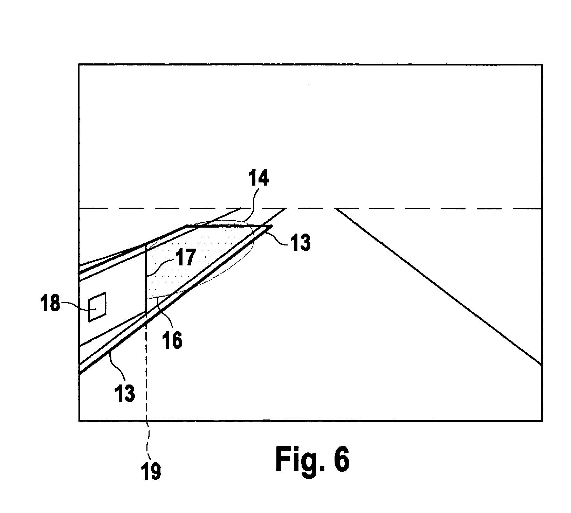

Eine alternative Ausgestaltung ermittelt das Auftreten der Rücklichter 18 in dem Bild (Fig. 6). Die Rücklichter 18 erscheinen als helle lokal begrenzte Elemente in dem Seitenbereich 13. Erfasst die Auswertungseinrichtung 12 die Rücklichter 18, kann es ein Signal ausgeben, dass das überholende Fahrzeug 4 das überholte Fahrzeug 1 passiert hat.

Die Auswertungseinrichtung 12 kann in gleicher Weise den rechten Randbereich 14 untersuchen. Insbesondere im Stadtverkehr sind überholende Fahrzeuge auf beiden Seiten zu erwarten.

Die von der Auswertungseinrichtung 12 ausgegebenen Signale können einem Fahrerassistenzsystem und/oder vorausschauenden Sicherheitssystemen (PSS) zugeführt werden. Die Systeme können die Steuerung des Fahrzeuges ansprechend auf die Signale teilweise oder vollständig übernehmen, oder den Fahrer durch geeignete Mittel auf eine Gefahrensituation hinweisen.

Entgegenkommende Fahrzeuge können mit dem beschriebenen Verfahren analog erkannt werden. Zudem ist es möglich zu erkennen, wann diese sich neben dem Fahrzeug befinden. In einer ersten Variante sind dafür Kameras an der Heckseite des Fahrzeuges angebracht. Die Auswertung erfolgt wie obig beschrieben.

In einer anderen Ausgestaltung wird zunächst ein Anstieg der Lichtintensität in einem dem Fahrzeug fernen Bereich des Randbereichs 13 erfasst. Der Grenzbereich nähert sich dem Fahrzeug. Hieraus kann die Auswertungseinrichtung 12 die relative Geschwindigkeit schätzen. Wenn die Intensität im Fahrzeug-nahen Bereich wieder abfällt, passieren die Scheinwerfer 5 des entgegenkommenden Fahrzeuges 4 das Fahrzeug 1. Die Auswertungseinrichtung 12 kann dies erfassen und ein entsprechendes Signal ausgeben. Die Auswertungseinrichtung 12 kann basierend auf der geschätzten relativen Geschwindigkeit und der typischen Abmessungen von Fahrzeugen den Zeitpunkt ermitteln, an dem die beiden Fahrzeuge einander vollständig passiert haben.

Eine Plausibilisierung kann durch Auswerten der Trajektorie des eigenen Fahrzeuges und/oder der Fahrbahnmarkierungen erfolgen.

## Patentansprüche

1. Verfahren zum Erfassen eines an einem Fahrzeug (1) vorbeifahrenden Fahrzeuges (4) bei Dunkelheit mit den Schritten:
Erfassen eines **auf die Fahrbahn auftreffenden** Lichtkegels (5), der sich seitlich versetzt,
relativ zu dem Fahrzeug (1) bewegt, mittels einer Kamera (7), und
Zuordnen des sich relativ bewegenden Lichtkegels (5) zu dem vorbeifahrenden Fahrzeug (± 4) mittels einer Auswertungseinrichtung (12).

2. Verfahren nach Anspruch 1, wobei die Kamera (7) den Lichtkegel (5) in einem Seitenbereich (13, 14) erfasst, der sich im Vorfeld des Fahrzeuges (1) außerhalb einer Fahrspur (2) des Fahrzeuges befindet.

3. Verfahren nach Anspruch 2, wobei die Auswertungseinrichtung (12) einen Anstieg einer Lichtstärke in einem Fahrzeug-nahen Bereich des Seitenbereichs (13,14) einem Lichtkegel (5) einem vorbeifahrenden Fahrzeuges (4) zuordnet, das überholt.

4. Verfahren nach Anspruch 2, wobei die Auswertungseinrichtung (12) einen Grenzbereich (14) bestimmt, in dem die Lichtstärke über einen Schwellwert ansteigt, eine Verschiebung des Grenzbereichs (14) über die Zeit erfasst, und die Verschiebung einer Bewegung des Lichtkegels (5) des vorbeifahrenden Fahrzeugs (4) zuordnet.

5. Verfahren nach Anspruch 4, wobei die Auswertungseinrichtung (12) basierend auf dem Verschieben des Grenzbereichs (14) eine Geschwindigkeit des vorbeifahrenden Fahrzeugs schätzt.

6. Verfahren nach einem der Ansprüche 2 bis 5, wobei die Auswertungseinrichtung (12) nach einem Anstieg der Lichtstärke einen Abfall der Lichtstärke unter einen Schwellwert in dem Fahrzeug-nahen Bereich des Seitenbereichs (13, 14) erfasst und darauf ansprechend ein Signal ausgibt, welches angibt, dass das vorbeifahrende Fahrzeug (4) sich zumindest teilweise neben dem Fahrzeug (1) befindet.

7. Verfahren nach einem der vorhergehenden Ansprüche, wobei die Kamera (7) Rücklichter des vorbeifahrenden Fahrzeuges erfasst und die Auswertungseinrichtung (12) darauf ansprechend ein Signal ausgibt, welches angibt, dass das vorbeifahrende Fahrzeug (4) das Fahrzeug passiert hat.

8. Vorrichtung zum Erfassen eines an einem Fahrzeug (1) vorbeifahrenden Fahrzeuges (4) bei Dunkelheit mit:
einer Kamera (7) zum Erfassen eines **auf die Fahrbahn auftreffenden** Lichtkegels (5), der sich seitlich versetzt, relativ zu dem Fahrzeug (1) bewegt, und
einer Auswertungseinrichtung (12) zum Zuordnen des sich relativ bewegenden Lichtkegels (5) zu dem vorbeifahrenden Fahrzeug (± 4).

## Claims

1. Method for detecting a vehicle (4) passing by a vehicle (1) in the dark, having the steps of:
using a camera (7) to detect a light cone (5) which impinges on the carriageway and is moving in a laterally offset fashion relative to the vehicle (1),
and
using an evaluation device (12) to assign the relatively moving light cone (5) to the passing vehicle (4).

2. Method according to Claim 1, in which the camera (7) detects the light cone (5) in a lateral zone (13, 14) which is located in front of the vehicle (1) outside a traffic lane (2) of the vehicle.

3. Method according to Claim 2, in which the evaluation device (12) assigns an increase in a light intensity in an area of the lateral zone (13, 14) near the vehicle to a light cone (5) of a passing vehicle (4) which is overtaking.

4. Method according to Claim 2, in which the evaluation device (12) determines a boundary zone (14) in which the light intensity increases above a threshold value, detects a shift in the boundary zone (14) over time, and assigns the shift to a movement of the light cone (5) of the passing vehicle (4).

5. Method according to Claim 4, in which the evaluation device (12) estimates a speed of the passing vehicle on the basis of the shift in the boundary zone (14).

6. Method according to one of Claims 2 to 5, in which after an increase in the light intensity the evaluation device (12) detects a drop in the light intensity below a threshold value in the area of the lateral zone (13, 14) near the vehicle, and in response thereto outputs a signal which indicates that the passing vehicle (4) is located at least partially next to the vehicle (1).

7. Method according to one of the preceding claims, in which the camera (7) detects rear lights of the passing vehicle, and in response thereto the evaluation device (12) outputs a signal which indicates that the passing vehicle (4) has passed the vehicle.

8. Device for detecting a vehicle (4) passing by a vehicle (1) in the dark, having:
a camera (7) for detecting a light cone (5) which impinges on the carriageway and is moving in a laterally offset fashion relative to the vehicle (1),
and
an evaluation device (12) for assigning the relatively moving light cone (5) to the passing vehicle (4).

## Revendications

1. Procédé de détection d'un véhicule (4) qui passe à proximité d'un véhicule (1) dans l'obscurité, comprenant les étampes :
détection au moyen d'une caméra (7) d'un cône de lumière (5) incident sur la chaussée, lequel se décale latéralement et se déplace par rapport au véhicule (1),
et
affectation au moyen d'un dispositif d'interprétation (12) du cône de lumière (5) ayant un mouvement relatif au véhicule (4) qui passe à proximité.

2. Procédé selon la revendication 1, selon lequel la caméra (7) détecte le cône de lumière (5) dans une zone latérale (13, 14) qui se trouve à l'avant du véhicule (1) à l'extérieur d'une bande de circulation (2) du véhicule.

3. Procédé selon la revendication 2, selon lequel le dispositif d'interprétation (12) associe une augmentation de l'intensité lumineuse dans une zone proche du véhicule de la zone latérale (13, 14) à un cône de lumière (5) d'un véhicule (4) qui passe à proximité qui est en train de doubler.

4. Procédé selon la revendication 2, selon lequel le dispositif d'interprétation (12) détermine une zone limite (14) dans laquelle l'intensité lumineuse augmente au-dessus d'une valeur de seuil, détecte un décalage de la zone limite (14) dans le temps et associe le décalage à un mouvement du cône de lumière (5) du véhicule (4) qui passe à proximité.

5. Procédé selon la revendication 4, selon lequel le dispositif d'interprétation (12) estime une vitesse du véhicule qui passe à proximité en se basant sur le décalage de la zone limite (14).

6. Procédé selon l'une des revendications 2 à 5, selon lequel le dispositif d'interprétation (12), après une augmentation de l'intensité lumineuse, détecte une diminution de l'intensité lumineuse au-dessous d'une valeur de seuil dans la zone proche du véhicule de la zone latérale (13, 14) et, réagissant à cela, délivre un signal qui indique que le véhicule (4) qui passe à proximité se trouve au moins partiellement à côté du véhicule (1).

7. Procédé selon l'une des revendications précédentes, selon lequel la caméra (7) détecte les feux arrière du véhicule qui passe à proximité et le dispositif d'interprétation (12), réagissant à cela, délivre un signal qui indique que le véhicule (4) qui passe à proximité a dépassé le véhicule.

8. Dispositif pour détecter un véhicule (4) qui passe à proximité d'un véhicule (1) dans l'obscurité, comprenant :
une caméra (7) pour détecter un cône de lumière (5) incident sur la chaussée, lequel se décale latéralement et se déplace par rapport au véhicule (1), et
un dispositif d'interprétation (12) pour affecter le cône de lumière (5) ayant un mouvement relatif au véhicule (4) qui passe à proximité.
